**Europäisches Patentamt**

**European Patent Office**

**Office européen des brevets**

(11) Veröffentlichungsnummer: **0 161 518**
**A2**

(12) **EUROPÄISCHE PATENTANMELDUNG**

(21) Anmeldenummer: **85104648.2**

(22) Anmeldetag: **17.04.85**

(51) Int. Cl.⁴: **H 04 Q 7/04**

(30) Priorität: **18.05.84 DE 3418507**

(43) Veröffentlichungstag der Anmeldung: **21.11.85**
**Patentblatt 85/47**

(84) Benannte Vertragsstaaten: **AT CH DE FR GB IT LI NL SE**

(71) Anmelder: **ANT Nachrichtentechnik GmbH,**
**Gerberstrasse 33, D-7150 Backnang (DE)**

(72) Erfinder: **Morlang, Rudolf, Ing. grad.,**
**Robert-Mayer-Strasse 1, D-7150 Backnang (DE)**

(74) Vertreter: **Schickle, Gerhard, Dipl.-Ing., ANT**
**Nachrichtentechnik GmbH Patent- und Lizenzabteilung**
**Gerberstrasse 33, D-7150 Backnang (DE)**

(54) **Funk-Personenrufsystem.**

(57) Das erfindungsgemäße Funk-Personenrufsystem besteht aus einer Funkrufzentrale (FZ), welche mit einem Fernsprechwählvermittlungsnetz (FVst) verbunden ist. An die Funkrufzentrale (FZ) ist ein Funkrufsender (FS) angeschlossen, der in Funkkontakt mit den Funkrufempfängern (FE) steht. Soll eine Person gerufen werden, so wird von einem an das Fernsprechwählvermittlungsnetz (FVst) angeschlossenen Fernsprechapparat (F₁ ... Fₙ) die Kennzahl der Funkrufzentrale (FZ) und die Rufnummer der zu rufenden Person gewählt. Dadurch wird ein Rufsignal an den betreffenden Funkrufempfänger (FE) ausgesandt. Zur Information der gerufenen Person besteht eine Sprechverbindung für eine Sprachdurchsage von dem betreffenden Fernsprechapparat (F₁ ... Fₙ) zu dem betreffenden Funkrufempfänger (FE). Damit bei nur kurzzeitiger Belegung des Funkkanals die Sprachdurchsage richtig verstanden wird ist in die Sprechverbindung in der Funkrufzentrale (FZ) ein Analog-Digital-Wandler (AD–W) und im Funkrufempfänger (FE) ein digitaler Empfangsspeicher (ESp) sowie ein Digital-Analog-Wandler (DA–W) eingefügt, und die Digital-Analog-Wandlung sowie Wiedergabe der im Empfangsspeicher (ESp) gespeicherten Digital-Signale wird mehrmals wiederholt.

## Funk-Personenrufsystem

Die Erfindung betrifft ein Funk-Personenrufsystem gemäß dem
Oberbegriff des Patentanspruchs 1. Ein solches System ist
in der deutschen Offenlegungsschrift 31 23 617 beschrieben.
Es besteht aus einer Funkrufzentrale, welche mit einem
Fenrsprechwählvermittlungsnetz verbunden ist. An die Funkrufzentrale ist ein Funkrufsender angeschlossen, der über
einen Funkkanal in Funkkontakt mit den Funkrufempfängern
steht. Es können auch mehrere Funkrufsender vorgesehen
sein. Die Funkrufempfänger werden von den zu rufenden
Personen mitgeführt.

Soll eine Person gerufen werden, so wird als Rufauftrag von
einem an das Fernsprechwählvermittlungsnetz angeschlossenen
Fernsprechapparat die Kennzahl der Funkrufzentrale und die
Rufnummer der zu rufenden Person gewählt. Dadurch wird ein
Rufsignal an den betreffenden Funkrufempfänger ausgesandt,
wobei der Ruf am Funkrufempfänger akustisch ausgegeben wird.
Zur Information der gerufenen Person kann eine Sprechverbindung hergestellt werden, über die die rufende Person eine
Sprachdurchsage vornehmen kann. Da diese aber nur von der
rufenden zur gerufenen Person möglich ist, kann sie weder
zurückfragen noch den Empfang bestätigen. Um trotzdem zu
erreichen, daß die Sprachdurchsage richtig verstanden wird,
muß die rufende Person langsam und deutlich sprechen und
die Durchsage vorsichtshalber mehrmals wiederholen. Dadurch
wird der Funkkanal verhältnismäßig lange belegt und doch
nur eine verhältnismäßig geringe Wahrscheinlichkeit für den
richtigen Empfang der Information erreicht.

Eine kurze Belegung des Funkkanals ist aber wichtig, da für
den Bereich einer Funkrufzentrale nur ein einziger Funkkanal
vorgesehen ist, so daß immer nur ein einziger Rufauftrag erledigt werden kann. Da sich ferner in einem Bereich viele
Personen mit Funkrufempfänger aufhalten, können mehrere Rufaufträge gleichzeitig vorliegen. Da jeweils nur ein Rufauftrag ausgeführt werden kann, treten Wartezeiten auf. Diese
sind umso länger und werden umso störender empfunden, je
länger der Funkkanal für einen einzelnen Rufauftrag belegt
ist.

Aufgabe der Erfindung ist es, ausgehend von dem bekannten
Personen-Funkrufsystem ein solches anzugeben, welches ein
sicheres Verstehen der Sprachdurchsage bei nur kurzzeitiger Belegung des Funkkanals gewährleistet.

Diese Aufgabe wird durch ein Personen-Funkrufsystem gemäß
dem Patentanspruch 1 gelöst.

Das bekannte Funk-Personenrufsystem ermöglicht es, anstelle
der Sprachdurchsage zur Information der gerufenen Person
eine Ziffernfolge nachzuwählen, welche am Funkrufempfänger
angezeigt wird. So wird zwar eine kurzzeitige Belegung des
Funkkanals und ein sicheres Verstehen der Information erreicht, jedoch ist es nachteilig, daß mit einer Ziffernfolge
nur eine sehr beschränkte Informationsmöglichkeit besteht
und daß die Bedeutung solcher Ziffernfolgen vorher vereinbart werden muß.

Aus der deutschen Offenlegungsschrift 32 03 473 ist ein
weiteres Funk-Personenrufsystem bekannt, bei welchem die
rufenden Person durch Spracheingabe eine Information für
die gerufene Personen eingeben kann. Durch Quellencodierung
in einer Spracherkennungsschaltung werden die eingegebenen
analogen Sprachsignalen in ihrem Sinn entsprechende Digitalsignale gewandelt. Diese werden an den betreffenden
Funkrufempfänger übertragen und steuern dort eine Ziffernanzeige. Nachteilig ist die Beschränkung auf einige Ziffern
und auf einen begrenzten Personenkreis, da die Spracherkennungsschaltungen an die jeweiligen Benutzer angepaßt werden
müssen.

Die Anwendung eines Analog-Digital-Wandlers für Wellenform-
codierung, um aus analogen Sprachsignalen Digitalsignale
zu gewinnen, diese in einem digitalen Speicher zu speichern,
und sie in einem Digital-Analog-Wandler wieder in analoge
Sprachsignale umzuwandeln, ist an sich aus der deutschen
Zeitschrift "Zettler-Nachrichten", Nr. 47, November 1980,
Seiten 1 bis 10, bekannt.

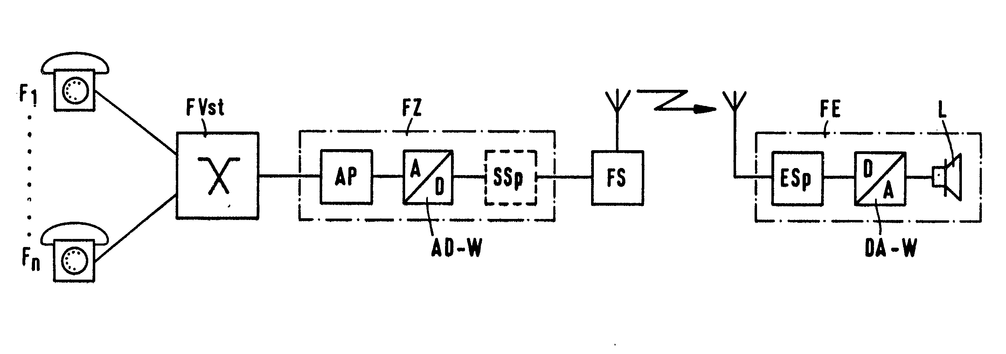

Ein erstes Ausführungsbeispiel des erfindungsgemäßen Personen-Funkrufsystems wird anhand der Figur beschrieben. Es
besteht aus einer Funkrufzentrale FZ, einem an diese angeschlossenen Funkrufsender FS und den mit diesem über einen
Funkkanal in Funkkontakt stehenden, von den zu rufenden
Personen mitgeführten Funkrufempfängern FE. Je nach den
Funk-Ausbereitungsbedingungen und der Größe des zu überdekkenden Bereiches genügt ein einziger Funkrufsender, oder
es müssen mehrere Funkrufsender an die Funkrufzentrale angeschlossen werden.

Das Fernsprechwählvermittlungsnetz ist durch eine Fernsprechwählvermittlungsstelle FVst angedeutet, an welche
einerseits die Fernsprechapparate $F_1$ bis $F_n$ und andererseits die Funkrufzentrale FZ angeschlossen sind.

Die Funkrufzentrale FZ enthält eine Anpassungsübertragung
AP, auf der der Anschluß mit dem Fernsprechwählvermittlungsnetz FVst endet. Ihr ist ein Analog-Digital-Wandler AD-W
nachgeschaltet. Die in der Figur gestrichelt eingezeichnete
Baugruppe ist in dem hier beschriebenen Ausführungsbeispiel
nicht vorhanden, vielmehr ist der Analog-Digital-Wandler
AD-W unmittelbar mit dem Funkrufsender FS verbunden.

Der Funkrufempfänger FE enthält einen digitalen Empfangsspeicher ESp, einen diesem nachgeschalteten Digital-Analog-
Wandler DA-W und einen daran angeschlossenen Lautsprecher
L als elektro-akustischen Wandler.

Um eine Person zu rufen, wählt die rufende Person an einem
der Fernsprechapparate $F_1$ bis $F_n$ die Kennzahl der Funkrufzentrale FZ. So wird eine Fernsprechverbindung von diesem
Fernsprechapparat über das Fernsprechwählvermittlungsnetz
FVst zu der Anpassungsübertragung AP hergestellt. Diese Anpassungsübertragung ist so ausgebildet, daß sie gegenüber
dem Fernsprechwählvermittlungsnetz FVst alle Funktionen zum
Aufbau und nach Erledigung des Rufauftrages zur Trennung der
Fernsprechverbindung ausführt. Über diese Fernsprechverbindung wählt die rufende Person die Rufnummer der zu rufenden
Person. Diese Wahlsignale werden in der Funkrufzentrale FZ
ausgewertet um ein Rufsignal über den Funkrufsender FS an
den betreffenden Funkrufempfänger FE zu senden, welches dort
akustisch und optisch ausgegeben wird.

Zur Information der so gerufenen Person besteht eine Sprechverbindung von dem betreffenden Fernsprechapparat über das
Fernsprechwählvermittlungsnetz FVst, die Funkrufzentrale FZ,
den Funkrufsender FS, den Funkkanal zu dem betreffenden
Funkrufempfänger FE. Bei einer Sprachdurchsage über diese
Verbindung werden analoge Sprachsignale von dem betreffenden
Fernsprechapparat über das Fernsprechwählvermittlungsnetz
FVst und über die Anpassungsübertragung AP an den hier in
die Sprechverbindung eingefügten Analog-Digital-Wandler AD-W
übertragen. Dieser wandelt die analogen Sprachsignale nach
einem Wellenform-Codierverfahren, insbesondere nach einem
Puls-Code-Modulationsverfahren in entsprechende Digitalsignale um. Günstig sind hier die Deltamodulationsverfahren
wegen der niedrigen Bitrate der von ihnen abgegebenen Digitalsignale und der so möglichen geringen Bandbreite des
Funkkanals und der geringen notwendigen Speicherkapazität
des Empfangsspeichers ESp. Besonders günstig ist das CVSD-
(Continously Variable Slope Deltamodulator)-Verfahren.

Die vom Analog-Digital-Wandler AD-W abgegebenen Digitalsignale werden über den Funkrufsender FS und über den Funkkanal zu dem digitalen Empfangsspeicher ESp übertragen.

Die dazu im Funkrufsender FS und Funkrufempfänger FE notwendigen und zur Übertragung der Digital-Signale ausgebildeten Modulatoren, Verstärker, Selektionsmittel, Demodulatoren usw. sind in der Figur nicht eingezeichnet.

Die so übertragenen Digitalsignale werden im digitalen Empfangsspeicher ESp gespeichert. Dieser ist als elektrisch
lad-, les- und löschbarer Halbleiterspeicher ausgebildet.
Seine Speicherkapazität ist so gewählt, daß sich unter Berücksichtigung der Bitrate des Digitalsignals eine Sprechdauer von 30s ergibt. Eine solche Sprechdauer wird als
Sprachdurchsage in Personenrufsystemen für ausreichend
lang angesehen.

Die Digitalsignale werden nicht zerstörend aus dem digitalen Empfangsspeicher ESp ausgespeichert und dem Digital-
Analog-Wandler DA-W zugeführt. Dieser arbeitet umgekehrt
wie der AnalogDigital-Wandler AD-W und liefert an seinem
Ausgang die den ursprünglichen analogen Sprachsignalen
entsprechende analoge Sprachsignale, welche in einem nicht
gezeichneten Verstärker verstärkt und durch den Lautsprecher
L wiedergegeben werden.

Der digitale Empfangsspeicher ESp und der Digital-Analog-Wandler DA-W sind so ausgebildet, daß durch eine nicht gezeichnete
Steuerung das Ausspeichern der Digitalsignale, ihr Umwandeln
in analoge Sprachsignale und ihre Wiedergabe durch den Lautsprecher wiederholt wird, bis das Wiederholen durch Betätigen einer Taste abgestellt wird. Eine andere Möglichkeit ist,
daß das selbsttätige Wiederholen nur einige Mal geschieht,
jedoch durch Tastenbetätigung weitere Wiederholungen eingeleitet werden können. So kann die gerufene Person sich die
Sprachdurchsage so oft anhören, bis sie sie verstanden hat
oder bis der Empfangsspeicher gelöscht wird. Er wird erst mit
dem Eintreffen eines neuen, für diesen Funkrufempfänger bestimmten Rufsignals gelöscht.

Durch die Anwendung der Wellenform-Codierung kann das erfindungsgemäße Funk-Personenrufsystem von einem unbeschränkten
Personenkreis ohne Beschränkung auf einen bestimmten Wortschatz oder eine bestimmte Sprache benutzt werden.

Das sichere Verstehen der Sprachdurchsage und die kurzzeitige Belegung des Funkkanals werden durch ihre Übertragung als Digital-Signale und der Wiederholung ihrer Wiedergabe erreicht. Da Digitalsignale sehr sicher gegen Übertragungsstörungen sind, genügt eine einmalige Übertragung und
damit eine nur kurzzeitige Belegung des Funkkanals. Durch
die Wiederholung der Wiedergabe wird ein sicheres Verstehen
auch dann erreicht, wenn dies zunächst z.B. durch störendes
Raumgeräusch oder Ablenkung der gerufenen Person nicht möglich war.

Die Anwendung eines Halbleiterspeichers als Empfangsspeicher hat den Vorteil, daß gegen die bei tragbaren Geräten
unvermeidbaren Erschütterungen empfindliche  und anderweitig störanfällige mechanische Aufzeichnungsgeräte, z.B.
Tonbandgeräte, in den Funkrufempfängern entbehrlich sind.

Im zweiten Ausführungsbeispiel ist dem Analog-Digital-Wandler AD-W noch ein in der Figur gestrichelt eingezeichneter
digitaler Sendespeicher SSp nachgeschaltet. Dieser Speicher
ist wie der digitale Empfangsspeicher ESp elektrisch lad-,
les- und löschbar sowie als Halbleiterspeicher ausgeführt.
Seine Speicherkapazität ist ebenfalls auf eine Sprechdauer
von 30s abgestimmt. In ihm werden die Digitalsignale vor
dem Aussenden durch den Funkrufsender FS ganz oder teilweise zwischengespeichert. Das hat die folgenden Vorteile:
Es können mehrere, aus Anpassungsübertragung, Analog-Digital-Wandler und Sendespeicher bestehende Einheiten vorgesehen werden. In jede der Einheiten kann schon eine rufende Person die Rufnummer der zu suchenden Person und die
Sprachdurchsage eingeben. Eine solche Einheit wird erst

0161518

BK 84/23

dann zum Funkrufsender durchgeschaltet, wenn eine vollständige Eingabe vorliegt. So wird der Funkkanal besser ausgenutzt.

Ein weiterer Vorteil ist, daß die Digitalsignale nicht wie im ersten Ausführungsbeispiel in Echtzeit übertragen werden müssen. Die Bitrate beim Ausspeichern aus dem Sendespeicher und beim Übertragen über den Funkkanal kann entsprechend seiner Bandbreite bemessen werden. Bei großer Bandbreite kann so die Belegungszeit des Funkkanals sehr gering gehalten werden, andererseits sind auch Funkkanäle mit geringer Bandbreite brauchbar, allerdings unter Inkaufnahme einer längeren Belegungszeit.

*8*
- 1 -

ANT Nachrichtentechnik GmbH                    E7/Mlg/sch
Gerberstr. 33                                  BK 84/23
D-7150 Backnang

Patentansprüche

1.  Funk-Personenrufsystem, bestehend aus einer Funkrufzentrale (FZ), mindestens einem an diese angeschlossenen Funkrufsender (FS) und den mit diesem in Funkkontakt stehenden, von den zu rufenden Personen mitgeführten Funkrufempfängern (FE), wobei die Funkrufzentrale (FZ) mit einem Fernsprechwählvermittlungsnetz
    (FVst) verbunden ist, wobei die Rufaufträge an den
    an das Fernsprechwählvermittlungsnetz (FVst) ange-
    schlossenen Fernsprechapparaten ($F_1 \ldots F_n$) durch Wahl
    der Kennzahl der Funkrufzentrale (FZ) und anschliessend der Wahl der Rufnummer der zu suchenden Person
    eingegeben werden, wobei eine Sprechverbindung von
    der rufenden zur gerufenen Person über das Fernsprechwählvermittlungsnetz (FVst), die Funkrufzentrale (FZ),
    den Funkrufsender (FS), den Funkkanal und den Funkrufempfänger (FE) herstellbar ist, dadurch gekennzeichnet, daß in die Sprechverbindung in der Funkrufzentrale (FZ) ein Analog-Digital-Wandler für Wellenformcodierung (AD-W) und in den Funkrufempfängern
    (FE) digitale Empfangsspeicher (ESp) und diesen nachgeschaltet Digital-Analog-Wandler (DA-W) eingefügt sind,
daß der zwischen dem Ausgang des Analog-Digital-Wandlers
(AD-W) und dem Eingang des Digital-Analog-Wandlers (DA-W)
liegende Teil der Sprechverbindung zur Übertragung der
vom Analog-Digital-Wandler (AD-W) abgegebenen Digitalsignale ausgebildet ist, und daß der digitale Empfangsspeicher (ESp) und der Digital-Analog-Wandler (DA-W) für
die Wiederholung der Digital-Analog-Wandlung der im digitalen Empfangsspeicher (ESp) gespeicherten Digitalsignale ausgebildet sind.

2. Funk-Personenrufsystem nach Anspruch 1, dadurch gekennzeichnet, daß dem Analog-Digital-Wandler (AD-W) ein digitaler Sende-Speicher (SSp) nachgeschaltet ist.